**Europäisches Patentamt**

**European Patent Office**

**Office européen des brevets**

(19)

(11) Veröffentlichungsnummer: **0 188 653**
**B1**

(12) # EUROPÄISCHE PATENTSCHRIFT

(45) Veröffentlichungstag der Patentschrift: **03.10.90**

(21) Anmeldenummer: **85107394.0**

(22) Anmeldetag: **14.06.85**

(51) Int. Cl.⁵: **E 04 F 17/08, E 04 B 1/94, H 02 G 3/22, F 16 L 5/02**

(54) **Durchführung für mindestens eine Leitung, wie Rohr, Kabel oder dergl. durch eine Wandöffnung.**

(30) Priorität: **11.07.84 DE 3425429**

(43) Veröffentlichungstag der Anmeldung:
**30.07.86 Patentblatt 86/31**

(45) Bekanntmachung des Hinweises auf die
Patenterteilung:
**03.10.90 Patentblatt 90/40**

(84) Benannte Vertragsstaaten:
**AT BE CH FR GB IT LI NL SE**

(56) Entgegenhaltungen:
**DE-A-3 111 163**
**DE-A-3 419 352**

(73) Patentinhaber: **Hauff, Werner**
**Herlsbühlstrasse 19**
**D-7925 Dischingen-Ballmertshofen (DE)**

(72) Erfinder: **Hauff, Werner**
**Herlsbühlstrasse 19**
**D-7925 Dischingen-Ballmertshofen (DE)**

(74) Vertreter: **Fay, Hermann, Dipl.-Phys. Dr.**
**Ensingerstrasse 21 Postfach 1767**
**D-7900 Ulm (Donau) (DE)**

Courier Press, Leamington Spa, England.

**Beschreibung**

Die Erfindung betrifft eine Durchführung für mindestens eine Leitung, wie Rohr, Kabel oder dergl., durch eine Wandöffnung, mit wenigstens zwei die Wandöffnung auf beiden Wandseiten gegen die Leitung einerseits und die Laibung der Wandöffnung andererseits abschließenden Dichtkörper, und mit einem in den Hohlraum zwischen den Dichtkörpern, der Laibung und der Leitung eingebrachten Flammschutzmittel.

Durchführungen dieser Art sind aus DE-A-3 111 163 bekannt und dienen dazu, einen Feuerschutzabschluß zu bilden, durch den Leitungstrassen zwischen verschiedenen, durch die Wand voneinander getrennten Brandabschnittzonen feuerbeständig abgeschottet werden. Außer einer möglichst langen Feuerwiderstandsdauer soll die Durchführung außerdem die Eigenschaft einer moglichst guten Abdichtung gegen Wasser, Gas und Rauch besitzen. Bei der bekannten Durchführung ist das Flammschutzmittel ein verformbarer, jedoch im Brandfall verhärtender Brandschutzkitt, der in Form eines zylindrischen Füllkörpers in den Hohlraum zwischen den Dichtkörpern, der Laibung und der Leitung eingesetzt und an seiner äußeren Umfangsfläche von einem sich in der Wärme verengenden Schrumpfschlauchstück, an seiner inneren Umfangsfläche von einem weichen Kunststoffschlauch umschlossen ist, der zur Aufnahme der Leitung einen Längskanal bildet, der im Querschnitt etwas größer als die Leitung ist. Im Brandfall verpreßt das Schrumpfschlauchstück den Brandschutzkitt über den weichen Kunststoffschlauch gegen die Leitung, ehe der Brandschutzkitt in der Brandhitze verhärtet. Der Brandschutzkitt kann auch die Eigenschaft haben, vor seiner Verhärtung zu expandieren und dadurch seine durch das Schrumpfschlauchstück bewirkte Verpressung gegen die Leitung noch eigenständig zu unterstützen.

Bei einer aus DE-A-29 47 593 bekannten Durchführung anderen Aufbaus wird zur Branddämmung ein fester Füllstoff verwendet, der aus einer unter Hitzewirkung sich ausdehnenden Brandschutzmasse besteht, die Gasbildner enthält, die ab einer bestimmten Temperatur Gas entwickeln, das die Masse aufbläht, um wenigstens zum Teil durch Abbrand enstehende Leervolumina zu füllen und dadurch ein zu schnelles Fortschreiten der Brandzone zu verhindern.

Aus DE-A-27 37 978 ist es bekannt, bei feuerhemmenden Durchführungen Brandschutzmassen zu verwenden, die aus einem Polyolefin mit Mineralfüllstoff bestehen, wobei der Mineralfüllstoff aus Talk, Aluminiumhydroxid, Kalziumcarbonat oder Glimmer oder einem Gemisch dieser Substanzen besteht. Aluminiumhydroxid zersetzt sich in der Erwärmung des Brandfalls unter erheblicher Wärmeaufnahme und spaltet Wasser ab, das dampfförmig freigesetzt wird. Die Wärmeaufnahme wirkt dabei im Sinne einer Kühlung der Leitung und der Durchführungteile in der Brandzone und das entstehende Wasser, da es an der Brandstelle Sauerstoff verdrängt im Sinne eines flammhemmenden Schutzgases. Jedoch ist die Beimischung eines solchen Flammschutzmittels zu Kunststoff auf vergleichsweise geringe Mengen begrenzt, weil die Beimischung die technischen Werte der Kunststoffmischung sehr stark beeinträchtigt. Aus dieser Druckschrift ist es ebenfalls bekannt, der Brandschutzmasse einen bei Erwärmung im Brandfall aufgehenden Blähstoff beizumischen.

Der Erfindung liegt die Aufgabe zugrunde, eine Durchführung der eingangs genannten Art so auszubilden, daß die Menge des zum Einsatz kommenden Feuerschutzmittels und dadurch die Feuerwiderstandsdauer der Durchführung möglichst groß ist und die Durchführung einfach und schnell mit dieser Feuerschutzmittelmenge versehen werden kann.

Diese Aufgabe wird nach der Erfindung dadurch gelöst, daß das sich bei Erwärmung im Brandfall unter Wärmeaufnahme (endogen) zersetzende und ein flammhemmendes Schutzgas abspaltende Flammschutzmittel als gekörnter bis staubförmiger Feststoff vorliegt und in im Vergleich zu den Abmessungen des Hohlraums kleine verformbare Packeinheiten abgefüllt und daß der Hohlraum mit diesen Packeinheiten vollgepackt ist.

In einer bevorzugten Ausführungsform sind die äußeren Umhüllungen der Packeinheiten aus flexiblen Beuteln, Kissen oder dergl. gebildet und bestehen ihrerseits aus schwer entflammbaren Werkstoffen.

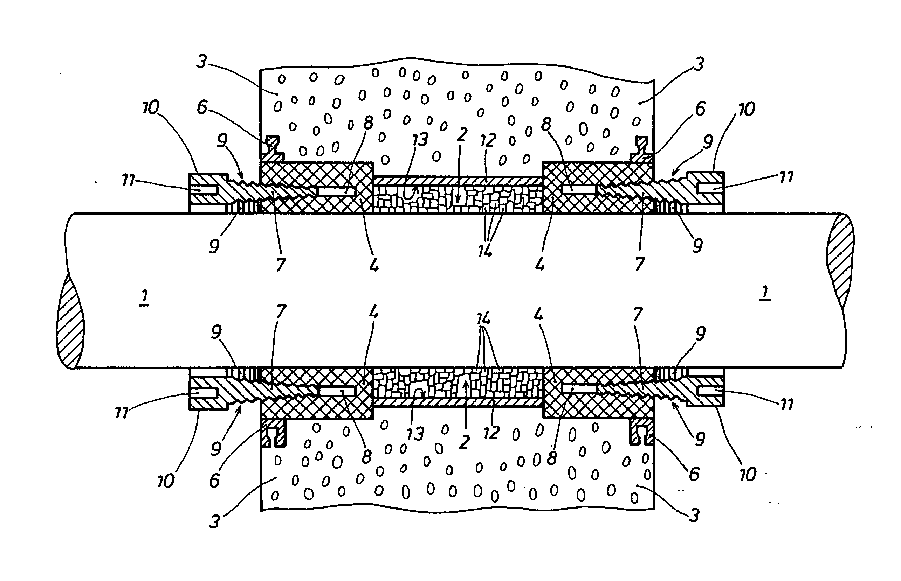

Im folgenden wird die Erfindung an einem in der Zeichnung dargestellten Ausführungsbeispiel näher erläutert. Die einzige Figur zeigt eine Durchführung nach der Erfindung in einem Axialschnitt, und zwar im in die Wand eingebauten Zustand.

In der Zeichnung ist die Leitung 1, beispielsweise ein Kabel mit im einzelnen nicht dargestelltem Innenaufbau, durch die Offnung 2 einer Betonwand 3 hindurchgeführt. Die Wandöffnung 2 ist auf beiden Wandseiten gegen die Leitung 1 einerseits und die von einem Futterrohr 12 gebildete Laibung 13 der Wandöffnung 2 durch zwei elastische Dichtkörper 4 aus Gummi oder ähnlichem elastisch verformbarem Werkstoff abgeschlossen, die einerseits gegen die Leitung 1, andererseits gegen die Laibung 13 abdichten. In die Wand 3 ist auf beiden Seiten je eine Stirnplatte 6 eingelassen. Außerdem ist an jedem Dichtkörper 4 eine ihn in der Wandöffnung 2 elastisch verpressende Druckvorrichtung vorgesehen, die von einem Preßring 7 gebildet ist. Dazu besitzt im Ausführungsbeispiel jeder Dichtkörper 4 eine die Leitung 1 kreisförmig umgebende, zur Wandaußenseite hin offene Ringnut 8, die in axialer Richtung so tief ist, daß sie über die Länge desjenigen Bereiches reicht, in der der Dichtkörper 4 gegenüber der Leitung 1 bzw. der Laibung 13 abdichten soll. In diese Ringnut 8 ist axial der Preßring 7 eingedrückt, dessen Wandstärke größer ist als die Breite der unverformten Ringnut 8 im unverspannten Dichtkörper 4. Der Preßring 7 bewirkt daher beim Eindrücken in die Ringnut 8 eine Werkstoffverdrängung im Dichtkörper 4 mit dem Ergebnis, daß sich der Dichtkörper 4 der Leitung 1 einerseits und der Laibung 13 der Wandöffnung 2 andererseits mit um so größerem Druck anlegt, je tiefer der Preßring 7 in die Ringnut.8 eingeführt ist. Dabei besteht insbesondere die in der Zeichnung dargestellte Möglichkeit, daß sich die Wanddicke des Preßrings 7, gesehen im Axialschnitt, von dem in Einsteckrichtung vordere Ringende aus keilförmig nach außen hin vergrößert, wobei im Ausführungsbeispiel der Fall einer keilförmigen Erweiterung sowohl der inneren als auch der äußeren Ringfläche dargestellt ist, so daß das Axialprofil des Preßringes 7 nach Art eines Doppelkeiles ausgebildet ist. Im übrigen besitzt der Preßring 7 sowohl an seiner Außenfläche wie an seiner Innenfläche eine in Umfangsrichtung verlaufende Rillierung 9, die als ein Gewinde ausgebildet ist, mit dem der Preßring 7 in die Ringnut 8 des Dichtkörpers 4 eingeschraubt werden kann. Diese Rillierung 9 bzw. dieses Gewinde führt zunächst zu einem formschlüssigen Sitz des Preßrings 7 im Dichtkörper 4 und erleichtert überdies die Montage des Preßrings 7, weil dafür nur noch eine drehende Bewegung des Preßrings 7 erforderlich ist. Um das Verdrehen des Preßrings 7 zu erleichtern, ist an dem aus der Ringnut 8 vorstehenden Ende des Preßrings 7 ein Bund 10 vorgesehen, der zum Ansatz eines geeigneten Schlüssels mit über den Umfang verteilt angeordneten Stirnlöchern 11 versehen sein kann, die zur Aufnahme von am Schlüssel in geeigneter Weise vorgesehenen Schlüsselzapfen dienen. In den Hohlraum zwischen den Dichtkörpern 4, der Laibung 13 und der Leitung 1 ist ein durch Punktierung angedeutetes Flammschutzmittel eingebracht, das den Hohlraum ausfüllt und sich bei Erwärmung im Brandfall unter Wärmeaufnahme zersetzt und ein flammhemmendes Schutzgas abspaltet. Das Flammschutzmittel enthält überwiegend Aluminiumhydroxid und eine Beimischung eines bei Erwärmung im Brandfall aufgehenden Blähstoffes. Das Flammschutzmittel besitzt die Form eines gekörnten bis staubförmigen Feststoffes und ist in im Vergleich zu den Abmessungen des Hohlraums kleine verformbare Packeinheiten 14 abgefüllt, mit welchen der Hohlraum vollgepackt und ausgestopft ist. Die äußerenUmhüllungen dieser Packeinheiten 14 bestehen aus flexiblen Beuteln, Kissen oder dergl.und können ihrerseits aus schwer entflammbarem Werkstoff hergestellt sein.

**Patentansprüche**

1. Durchführung für mindestens eine Leitung, wie Rohr, Kabel oder dergl. (1) durch eine Wandöffnung (2), mit wenigstens zwei die Wandöffnung (2) auf beiden Wandseiten gegen die Leitung (1) einerseits und die Laibung (13) der Wandöffnung andererseits abschließenden Dichtkörpern (4), und mit einem in den Hohlraum zwischen den Dichtköpern (4), der Laibung (13) und der Leitung (1) eingebrachten Flammschutzmittel, dadurch gekennzeichnet, daß das sich bei Erwärmung im Brandfall unter Wärmeaufnahme (endogen) zersetzende und ein flammhemmendes Schutzgas abspaltende Flammschutzmittel als gekörnter bis staubförmiger Feststoff vorliegt und in im Vergleich zu den Abmessungen des Hohlraums kleine verformbare Packeinheiten (14) abgefüllt und daß der Hohlraum mit diesen Packeinheiten vollgepackt ist.

2. Durchführung nach Anspruch 1, dadurch gekennzeichnet, daß die äußeren Umhüllungen der Packeinheiten (14) aus flexiblen Beuteln, Kissen oder dergl. gebildet sind.

3. Durchführung nach Anspruch 2, dadurch gekennzeichnet, daß die Umhüllungen ihrerseits aus schwer entflammbaren Werkstoffen besteht.

**Revendications**

1. Passage pour au moins une conduite, comme par exemple un tube, un câble ou analogue (1) dans une ouverture (2) d'une paroi, comportant au moins deux corps d'étanchéité (4), qui établissent une étanchéité des deux côtés de la paroi, entre l'ouverture (2) de cette dernière et la conduite (1) d'une part et entre l'ouverture (2) de la paroi et l'intrados (13) de l'ouverture de la paroi d'autre part, et comportant un moyen pare-flammes inséré dans la cavité présente entre les corps d'étanchéité (4), l'intrados (13) et la conduite (1), caractérisé en ce que le moyen pare-flammes, qui se décompose (d'une manière endogène) en absorbant de la chaleur, lors d'un échauffement dans le cas d'un incendie, et dégage un gaz protecteur inhibant les flammes, est présent sous la forme d'une substance solide allant d'un état granuleux jusqu'à un état de poussière, et remplit des unités de remplissage déformables (14), qui possèdent de faibles dimensions par rapport à celles de la cavité, et que la cavité est complètement remplie par ces unités de remplissage.

2. Passage selon la revendication 1, caractérisé en ce que les enveloppes extérieures des unités de remplissage (14) sont formées par des sacs, coussins ou articles analogues, flexibles.

3. Passage selon la revendication 2, caractérisé en ce que les enveloppes sont constituées pour leur part par des substances difficilement inflammables.

**Claims**

1. Duct for at least one line, such as a pipe, cable or the like (1) through a wall aperture (2), having at least two sealing bodies (4) sealing the wall aperture (2) on both sides relative to the line (1) on the one hand and the soffit (13) of the wall aperture on the other hand, and having a flame-protection agent inserted into the space between the sealing bodies (4), the soffit (13) and the line (1), characterised in that a flame-protection agent, which decomposes by absorbing heat (endogenous) when heated in the case of fire and releases a flame-preventive protection gas, is present in the form of a granulated to powdered solid and is filled into deformable packing units (14), which are small in comparison to the dimensions of the space, and in that the space is completely packed with these packing units.

2. Duct according to claim 1, characterised in that the outer coverings of the packing units (14) are formed of flexible sachets, cushions or the like.

3. Duct according to claim 2, characterised in that the coverings themselves consist of materials which are difficult to ignite.